# FASCICULE DE BREVET EUROPEEN

(11) **EP 0 567 415 B1**
(45) Date de publication et mention de la délivrance du brevet: **27.11.1996**
(21) Numéro de dépôt: 93420159.1
(22) Date de dépôt: 15.04.1993
(51) Int. Cl.: H01H 71/12, H02B 11/133

(54) **Disjoncteur débrochable à boîtier moulé**
Trennbarer Schalter mit Isolierstoffgehäuse
Disconnectable circuit breaker with moulded case

(30) Priorité: 23.04.1992 FR 9205137
(43) Date de publication de la demande: 27.10.1993
(73) Titulaire: SCHNEIDER ELECTRIC SA, 92100 Boulogne Billancourt (FR)
(72) Inventeur: Bur, Marc, MERLIN GERIN, F-38050 Grenoble Cedex 09 (FR); Nebon, Jean-Pierre, MERLIN GERIN, F-38050 Grenoble Cedex 09 (FR)
(74) Mandataire: Ritzenthaler, Jacques

(56) Documents cités:
- EP-A- 0 411 871
- FR-A- 2 594 266
- US-A- 2 805 294
- US-A- 3 343 042

## Description

L'invention est relative à un disjoncteur basse tension débrochable à boîtier moulé comprenant une partie fixe, notamment un socle ou un châssis de raccordement doté de contacts fixes d'embrochage et une partie mobile susceptible d'être déplacée entre une position embrochée et une position débrochée de la partie fixe et ayant des contacts mobiles d'embrochage qui coopèrent en position embrochée avec les contacts fixes d'embrochage, ladite partie mobile comprenant ledit boîtier moulé et logés à l'intérieur du boîtier moulé des contacts de coupure , un mécanisme de commande d'ouverture et de fermeture des contacts de coupure et un dispositif de déclenchement qui provoque l'ouverture des contacts de coupure lors d'un défaut.

Un disjoncteur débrochable monté sur un socle ou sur un châssis, peut être extrait ou remplacé rapidement sans avoir accès aux pièces sous tension, et l'installation restant en service. Pour des raisons de sécurité, il est interdit de débrocher un disjoncteur en charge et des mesures de sécurité, provoquant automatiquement le déclenchement du disjoncteur au cours de la manoeuvre de débrochage, ont déjà été proposées. Un tel dispositif comporte par exemple un pion faisant saillie de la face arrière du boîtier moulé, et coopérant avec la barre de déclenchement du disjoncteur pour empêcher toute fermeture du disjoncteur et provoquer son ouverture dès que le pion est en position de saillie. Lors de la mise en place du disjoncteur sur le socle ou le châssis, le pion est repoussé de manière à libérer la barre de déclenchement permettant la fermeture du disjoncteur. L'ensemble est agencé pour provoquer le déclenchement du disjoncteur avant son débrochage, et pour empêcher la refermeture du disjoncteur tant que ce dernier n'est pas réembroché. Toute fausse manoeuvre est ainsi empêchée, et le débrochage et l'embrochage du disjoncteur s'opèrent en parfaite sécurité. L'inconvénient de ce dispositif connu (voir par exemple US-A-2805294), est d'empêcher la réalisation de tests sur le disjoncteur débroché. Pour fermer le disjoncteur lorsqu'il est débroché, il est en effet indispensable d'enfoncer le pion et de le bloquer dans cette position enfoncée, avec le risque d'un embrochage d'un disjoncteur dont le pion est verrouillé et dont les contacts sont fermés.

La présente invention a pour but de permettre la réalisation d'un disjoncteur débrochable équipé d'un dispositif de prédéclenchement, évitant toute fausse manoeuvre et permettant la réalisation de tests de l'appareil en position débrochée.

Selon l'invention, un disjoncteur avec les caractéristiques du préambule de la revendication 1 est caractérisé en ce que ledit levier de transmission est susceptible de coopérer avec une came fixe solidaire de la partie fixe, et qu'en position débrochée ledit levier de transmission est à nouveau en position inactive autorisant l'ouverture et la fermeture des contacts de coupure.

La came actionne le levier de transmission au cours de la course d'embrochage et de débrochage, respectivement avant la fermeture des contacts d'embrochage et avant la séparation des contacts d'embrochage, de façon à éviter un embrochage ou un débrochage d'un disjoncteur en position fermée. En position embrochée et débrochée, le levier de transmission est en position inactive et le disjoncteur peut être ouvert ou fermé normalement. Cette ouverture et fermeture est toutefois empêchée lorsque le disjoncteur est dans un position intermédiaire entre l'embrochage et le débrochage pour provoquer soit l'ouverture du disjoncteur fermé, soit empêcher la fermeture de ce disjoncteur tant qu'il se trouve dans la position intermédiaire.

De préférence, le levier de transmission traverse un orifice ménagé dans la face arrière du boîtier moulé et est monté à coulissement dans un passage s'étendant dans la direction d'embrochage ou de débrochage du disjoncteur de préférence, l'extrémité du levier de transmission en saillie de la face arrière du boîtier moulé, est articulée sur l'un des bras d'un culbuteur, dont l'autre bras porte un organe suiveur de came, notamment un galet qui au cours de la course d'embrochage ou de débrochage coopère avec la came fixe, l'ensemble étant agencé pour transformer un mouvement sensiblement parallèle à la face arrière du boîtier moulé, imposé par la came fixe en un mouvement de coulissement du levier de transmission, dans la direction d'embrochage ou de débrochage. Les contacts d'embrochage sont avantageusement des tulipes de contacts qui coopèrent avec des broches faisant saillie de la face arrière du boîtier moulé. Le guidage du disjoncteur est avantageusement réalisé par des douilles isolantes, prolongeant les tulipes fixes et coopérant avec les broches de contact pour positionner et guider le disjoncteur au cours de la manoeuvre d'embrochage et de débrochage. Le même levier de transmission peut être utilisé pour assurer d'autres fonctions, notamment des fonctions d'interverrouillage entre deux disjoncteurs, le levier de transmission étant alors actionné par un mécanisme d'interverrouillage qui empêche toute fermeture simultanée des deux disjoncteurs.

D'autres avantages et caractéristiques ressortiront plus clairement de la description qui va suivre, d'un mode de mise en oeuvre de l'invention, donné à titre d'exemple non limitatif et représenté aux dessins annexés dans lesquels:

La figure 1 est une vue schématique en élévation et en coupe axiale d'un disjoncteur selon l'invention, représenté en position débrochée.

Les figures 2, 3 et 4 sont des vues analogues à celle de la figure 1, montrant respectivement le disjoncteur en cours d'embrochage, en positon embrochée, et en cours de débrochage.

La figure 5 est une vue en élévation et en coupe axiale d'un dispositif d'interverrouillage de deux disjoncteurs, une partie encerclée par un trait discontinu étant représentée dans la position correspondant au disjoncteur associé.

La figure 6 est une vue analogue à celle de la figure 5,, montrant le dispositif d'interverrouillage dans la position de déclenchement.

La figure 7 est une vue en perspective d'une platine de fixation des deux disjoncteurs équipés d'un dispositif d'interverrouillage, seul les boîtiers des disjoncteurs étant partiellement représentés.

La figure 8 est une vue analogue à celle de la figure 7, dans laquelle l'une des parties de la platine est supposée enlevée.

La figure 9 est une vue à échelle agrandie d'une partie de la figure 8.

La figure 10 est une vue en coupe d'un pôle du disjoncteur et de son mécanisme de commande.

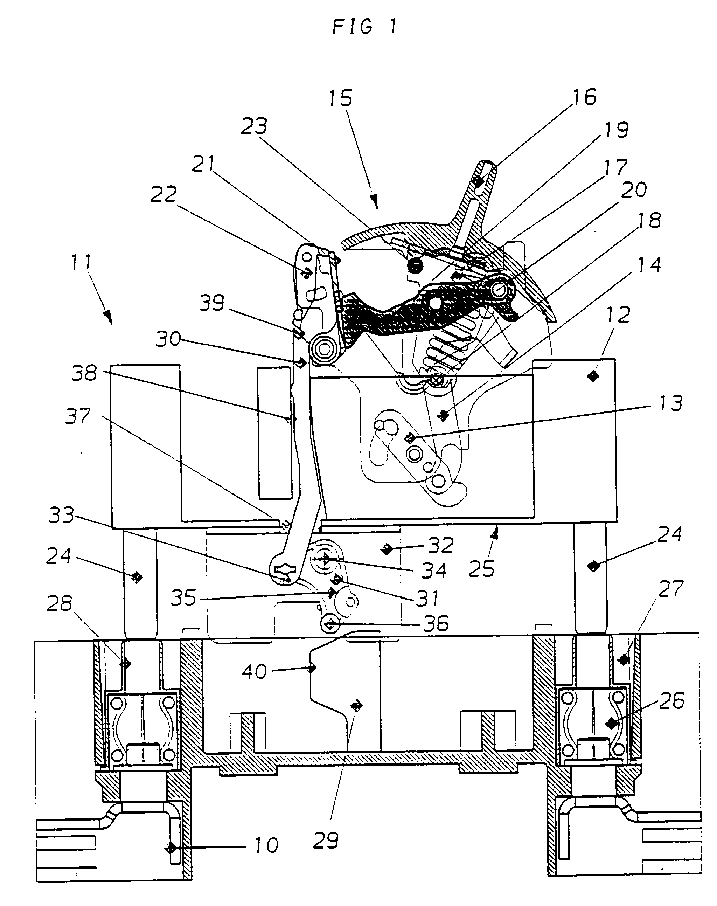

Sur les figures 1 à 4, un disjoncteur débrochable est constitué d'une partie fixe 10 en forme de socle ou de châssis, et d'une partie mobile 11 formant le disjoncteur proprement dit, en l'occurrence un disjoncteur à boîtier moulé 12, dont seule la base est représentée. Le disjoncteur 11 d'un type standard, comporte un barreau 53 de support des contacts mobiles 52 des différents pôles, auquel barreau est associée une manivelle de commande 13 accouplée à une genouillère 14 d'un mécanisme 15 d'ouverture et de fermeture du disjoncteur. Une poignée 16 pivotante commande l'ouverture et la fermeture manuelle du disjoncteur par l'intermédiaire d'un ressort 17 ancré, d'une part à l'axe 18 de la genouillère, et d'autre part à la poignée 16. L'extrémité opposée de la genouillère 14 est articulée à un crochet 19, dont l'une des extrémités est montée à pivotement sur un axe fixe 20 et dont l'extrémité opposée coopère avec un verrou 21. En position verrouillée, le crochet 19 exerce sur la surface de verrouillage du verrou 21 une force en direction de déverrouillage, par pivotement dans le sens inverse des aiguilles d'une montre, le verrou 21 étant maintenu en position de verrouillage par un accrochage pivotant 22. Le disjoncteur 11 comporte de plus un déclencheur (non représenté) qui actionne l'accrochage 22 lors d'un défaut pour provoquer l'ouverture automatique du disjoncteur par libération du verrou 21 et déverrouillage du crochet 19. La figure 1 représente le mécanisme 15 dans la position de fermeture du disjoncteur, l'ouverture de ce dernier pouvant être commandée manuellement par pivotement de la poignée 16 dans le sens inverse des aiguilles d'une montre, ou par un déclenchement automatique provoqué par le déclencheur.

Lors d'un déclenchement, la poignée 16 vient en une position intermédiaire, et le réarmement du mécanisme 15 est obtenu par un pivotement de la poignée 16 vers la position d'ouverture. Au cours de ce pivotement, un galet 23 solidaire de la poignée 16 engage le crochet 19 pour le ramener dans la position de verrouillage par le verrou 21. Cette position de réarmement qui correspond à la position d'ouverture, est une position stable de la manette 16, celle-ci restant dans cette position, même lors d'un déverrouillage de l'accrochage 22 par le déclencheur.

Un tel disjoncteur est décrit en détail dans la demande de brevet français n° 921486 déposée par la demanderesse le 7 février 1992, et le lecteur se reportera avantageusement à cette demande pour de plus amples détails.

Aux plages d'entrée et de sortie 55,56 des différents pôles du disjoncteur 11 sont connectées des broches d'embrochage 24 faisant saillie de la face arrière 25 du boîtier moulé 12. Lors de l'embrochage du disjoncteur 11 sur le socle 10, chaque broche 24 de forme cylindrique, vient s'embrocher sur un contact fixe d'embrochage constitué par une tulipe 26. Le socle 10 est constitué par une plaque isolante présentant des alvéoles 27 de logement des tulipes 26 orientées en direction de la face arrière 25 du boîtier moulé 12. Les tulipes 26 sont prolongées en direction de cette face arrière 25, par des douilles de guidage 28 isolantes, qui coopèrent avec les broches 24 pour positionner et guider le disjoncteur 11 au cours de la course d'embrochage et de débrochage.

Le disjoncteur 11 est équipé d'un système de prédéclenchement constitué d'une part par une came fixe 29, porté par le socle 10, et d'autre part par un système solidaire de la partie mobile constitué d'une équerre de support 32, fixée à la face arrière 25 du boîtier 12, laquelle équerre porte un culbuteur 31 dont l'un des bras 33 est articulé à un levier de transmission 30. Le culbuteur 31 est monté à pivotement sur un axe 34, solidaire de l'équerre 32, et le bras opposé 35 du culbuteur 31 porte un pion 36 susceptible de coopérer avec la came fixe 29. Le levier de transmission 30 traverse un orifice 37 de la face arrière 25, et un passage 38 ménagé à l'intérieur du boîtier 12 pour se terminer par une face 39 d'actionnement de l'accrochage 22. La came fixe 29, le culbuteur 31 et le levier de transmission 30 s'étendent dans un plan parallèle à la direction d'embrochage et de débrochage du disjoncteur 11, laquelle direction est perpendiculaire à la face arrière 25. Le bras 35 portant le pion 36 du culbuteur 31 s'étend sensiblement dans cette direction perpendiculaire à la face arrière 25, tandis que le bras 33 articulé au levier de transmission 30 est sensiblement perpendiculaire. Le profil 40 de la came fixe comporte un créneau qui coopère avec le pion 36 pour déplacer ce dernier au cours d'un mouvement d'embrochage du disjoncteur 11, vers la gauche sur la figure 1, puis à maintenir ce pion dans la position déviée avant de le libérer en fin de course d'embrochage. Ce mouvement de déviation vers la gauche du pion 36 provoque un pivotement du culbuteur 31 dans le sens des aiguilles d'une montre et un coulissement vers le haut de la figure 1 du levier de transmission 30, dont la face 39 engage l'accrochage 22 pour libérer le verrou 21. La libération du pion 36 autorise un pivotement inverse du culbuteur 31 et un coulissement vers le bas du levier de transmission 30 qui permet à nouveau l'accrochage du verrou 21.

Le dispositif fonctionne de la manière suivante:

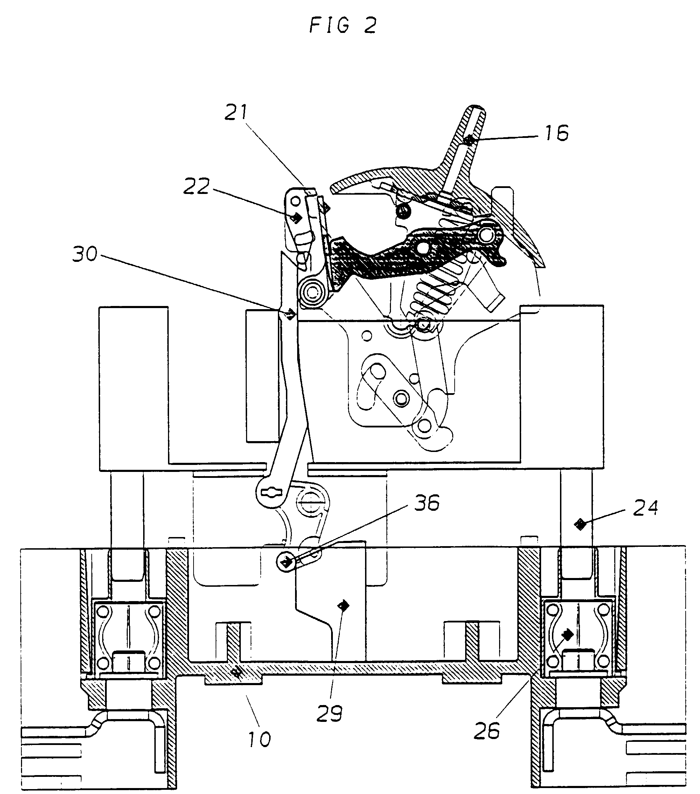

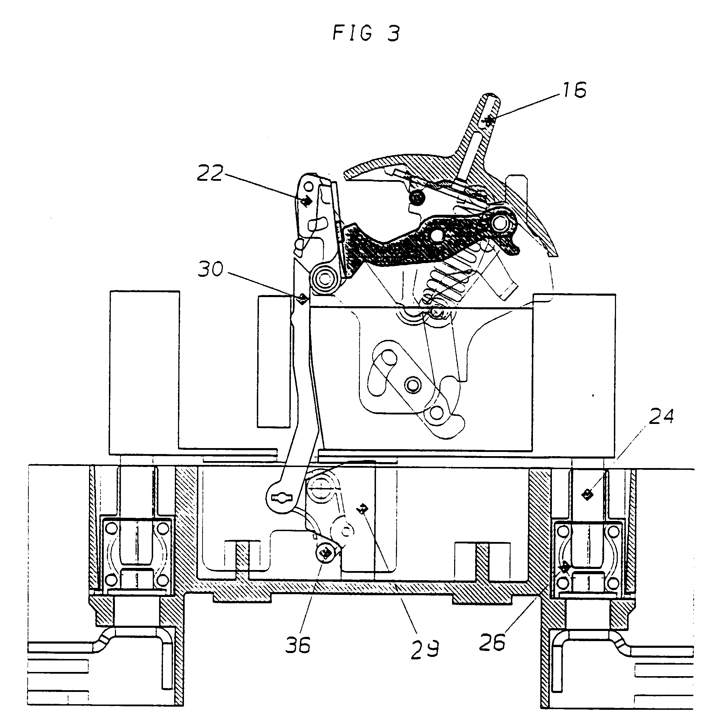

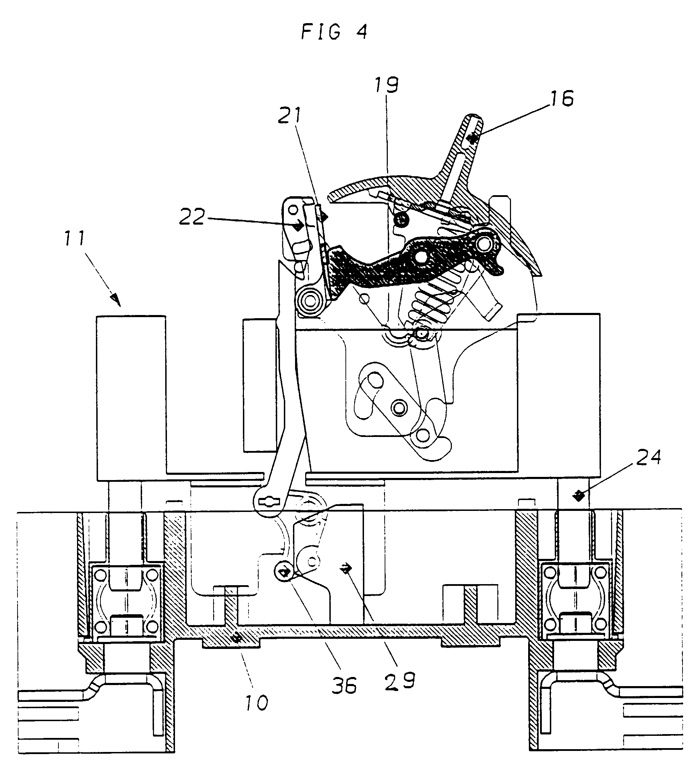

Le disjoncteur étant dans la position fermée, représentée à la figure 1 et débroché, on amorce le mouvement d'embrochage du disjoncteur 11 sur le socle 10, en introduisant les broches 24 dans les douilles 28. Dans cette position, le pion 36 n'a pas encore engagé la came fixe 29, et le verrou 21 maintient le crochet 19. Un mouvement poursuivi d'embrochage amène le disjoncteur 11 dans la position représentée à la figure 2, où les broches 24 sont toujours espacées des tulipes 26 et où la came fixe 29 a déplacé le pion 36 vers la gauche sur la figure, en provoquant le coulissement vers le haut de la tige de transmission 30, qui a fait pivoter l'accrochage 22. Le verrou 21 ainsi libéré autorise le pivotement du crochet 19 et le déclenchement du disjoncteur dont les contacts s'ouvrent. Le disjoncteur étant ouvert, il peut être embroché sans aucun risque, et en fin de course d'embrochage, le pion 36 franchit le créneau 40 et est à nouveau libéré de la came fixe 29 pour revenir en position initiale de déplacement vers la droite. Dans cette position embrochée, le levier de transmission 30 est inactif, et le disjoncteur peut être ouvert ou fermé normalement par actionnement de la poignée 16, la figure 3 représentant le disjoncteur embroché en position fermée. Le débrochage s'effectue par une manoeuvre inverse, et en un premier temps le pion 36 engage la came 29 et est déplacé vers la gauche sur la figure 4, pour actionner le levier de transmission 30 et provoquer le déclenchement du disjoncteur 11, par libération de l'accrochage 22 et du verrou 21. Le déclenchement intervient avant la séparation des contacts d'embrochage 24,26 qui s'effectue par la suite, le disjoncteur étant hors charge. En fin de course de débrochage et en position débrochée, le pion 36 quitte la came fixe 29 pour revenir en position initiale de libération de l'accrochage 22 et du verrou 21, permettant un fonctionnement normal du disjoncteur, notamment d'ouverture et de fermeture pour la réalisation de tests.

Il est facile de voir que le dispositif de prédéclenchement peut être associé à un disjoncteur standard, par simple fixation du support 32, avec le culbuteur 31 et le levier de transmission 30. Le système de prédéclenchement est particulièrement simple et il évite toute fausse manoeuvre.

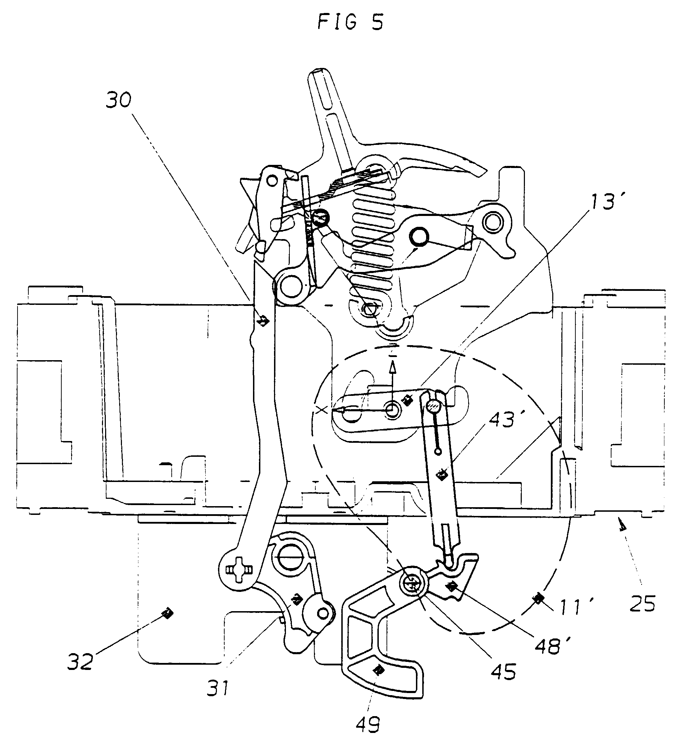

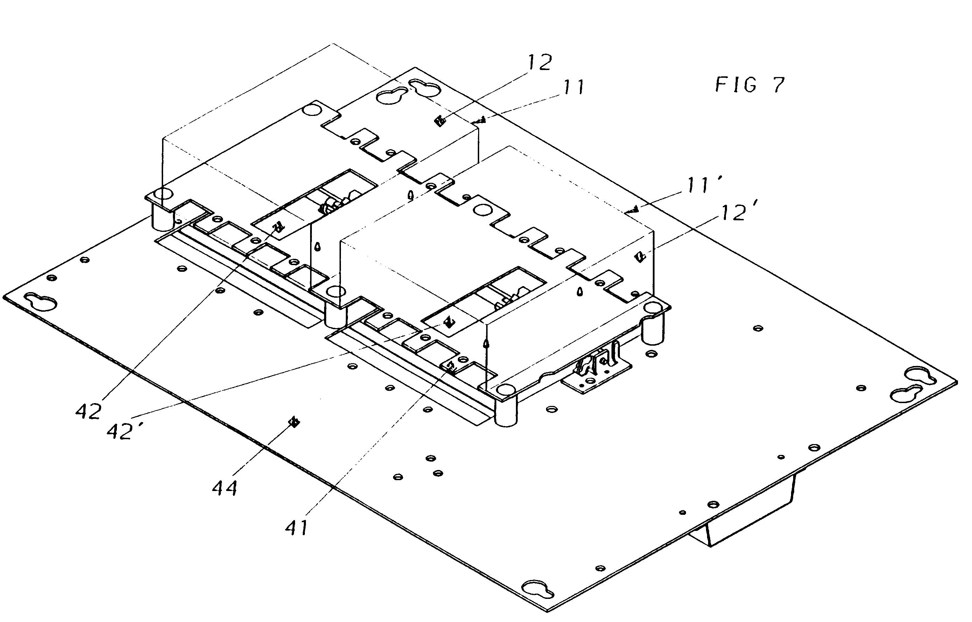

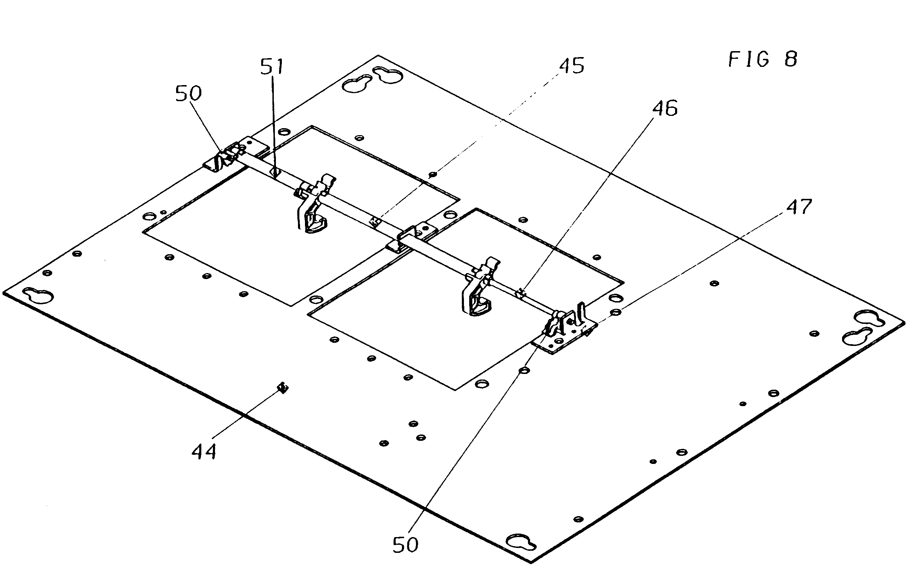

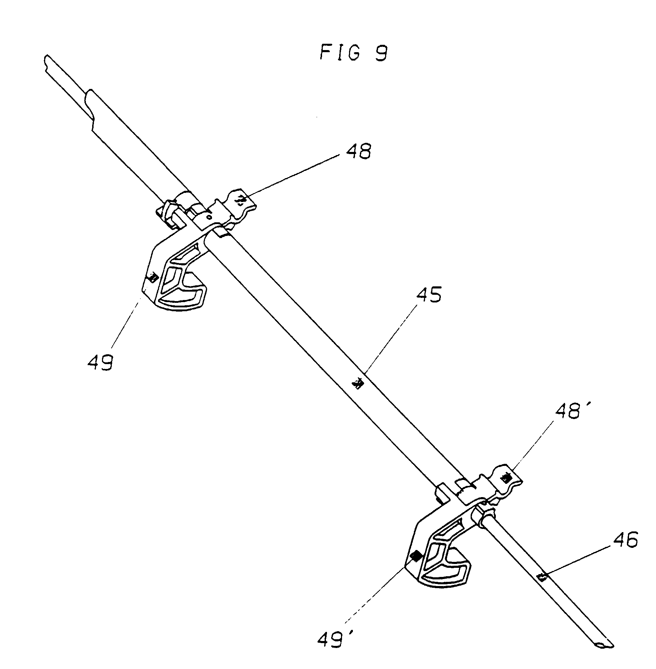

Sur les figures 5 à 9 qui illustrent un dispositif d'interverrouillage, les mêmes numéros de référence sont utilisés pour désigner des pièces analogues ou identiques à celles du disjoncteur illustré par les figures 1 à 4, les numéros de repères relatifs au premier disjoncteur étant affectés d'un indice. Un premier disjoncteur 11' et un deuxième disjoncteur 11, dont seul les boîtiers moulés 12,12' sont esquissés sur la figure 7, sont fixés sur une platine 41, côte à côte par tout moyen approprié. Chaque disjoncteur est équipé d'un dispositif de prédéclenchement analogue à celui décrit ci-dessus, et comportant un support 32 avec un culbuteur 31 et un levier de transmission 30. En position de fixation des disjoncteurs 11,11' sur la platine 41, les faces arrières 25 sont plaquées sur la platine 41, laquelle comporte deux orifices 42 dans lesquels s'emboîtent les supports 32. Chaque disjoncteur 11,11' est de plus équipé d'un poussoir 43,43', dont l'une des extrémités est articulée à la manivelle 13, et dont l'autre extrémité fait saillie de la face arrière 25, et pénètre dans les orifices 42 de la platine 41. La position du poussoir 43 est représentative de celle des contacts 52 du disjoncteur, en l'occurrence de l'ouverture et de la fermeture du disjoncteur.

La platine 41 est fixée à faible écartement à une plaque de base 44 parallèle de façon à ménager un intervalle , entre la platine 41 et la plaque de base 44, recevant un système de liaison mécanique entre les deux disjoncteurs 11,11'. Ce système de liaison est constitué de deux barres rotatives coaxiales, dont au moins l'une en forme de tube 45 entoure l'autre en forme d'axe 46. L'axe 46 est plus long que le tube 45, et les parties qui dépassent de part et d'autre de ce tube 45 sont montées à rotation dans des paliers 47 fixés à la plaque de base 44. L'axe 46 pivote librement dans les paliers 47, et le tube 45 pivote librement sur l'axe 46. Le tube 45 et l'axe 46 s'étendent transversalement aux disjoncteurs 11,11' et constituent respectivement une première et une deuxième liaison mécanique entre ces deux disjoncteurs. A cet effet, le tube 45 porte à l'une de ses extrémités en regard de l'orifice 42' de la platine 41, une première manivelle réceptrice 48' et à l'extrémité opposée, en regard de l'orifice 42, une deuxième came rotative 49. D'une manière analogue, l'axe 46 porte en regard de l'orifice 42', une première came rotative 49', et en regard de l'orifice 42 une deuxième manivelle réceptrice 48. Les manivelles réceptrices 48,48' présentent un alvéole de logement de l'extrémité des poussoirs 43,43' et il est facile de voir qu'un déplacement du poussoir 43' du premier disjoncteur 11' provoque le déplacement de la manivelle réceptrice associée 48', et un pivotement du tube 45, tandis que le poussoir 43 du deuxième disjoncteur 11 actionne la deuxième manivelle réceptrice 48 et provoque un pivotement de l'axe 46. Les cames rotatives 49,49' coopèrent avec les culbuteurs associés 31 pour déplacer les leviers de transmission 30 et les amener soit en position inactive, soit en position active de déclenchement du disjoncteur correspondant. L'axe 46 et le tube 45 sont sollicités en rotation dans le sens inverse des aiguilles d'une montre sur la figure 5, par des ressorts de rappel 50 de façon à maintenir les manivelles réceptrices 48,48' en appui des poussoirs associés 43,43'. Les ressorts de rappel 50 sont disposés au droit des paliers 47, le tube 45 étant alors prolongé par un fourreau 51. La position des manivelles réceptrices 48,48' est représentative de la position des contacts de coupure 52 du disjoncteur associé, et en position de fermeture de ces contacts, la manivelle réceptrice déplace la came rotative associée dans une position de déclenchement du levier de transmission 30.

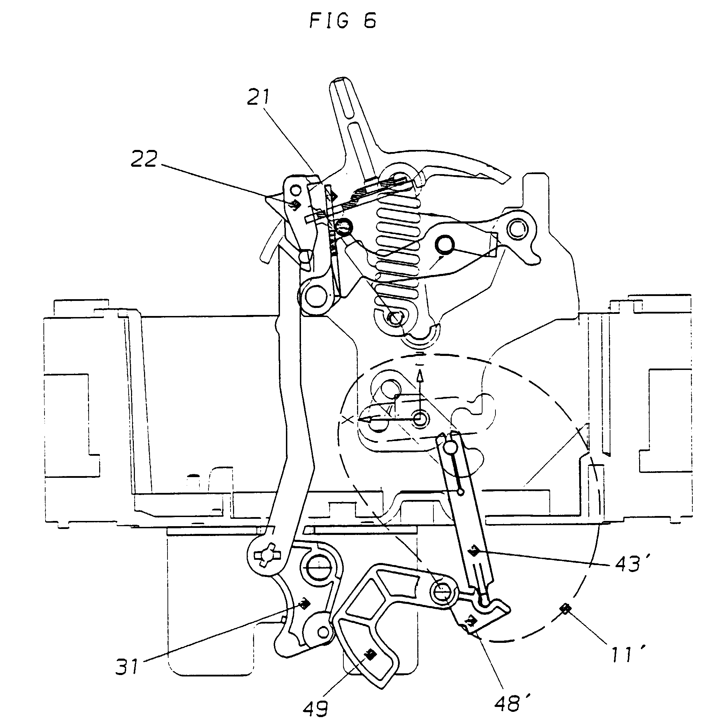

Le fonctionnement du dispositif d'interverrouillage est expliqué par la suite, en référence aux figures 5 et 6, dans lesquelles les pièces 13',43' et 48' encerclées par un trait discontinu sont représentées dans la position qu'elles occupent dans le premier disjoncteur 11', tandis que les autres pièces sont représentées dans la position occupée dans le deuxième disjoncteur 11. Sur la figure 5, le premier disjoncteur 11' est ouvert et le poussoir 43' est maintenu par la manivelle 13', en une première position relevée sur la figure 5. La liaison mécanique constituée par la première manivelle réceptrice 48', le tube 45 et la deuxième came rotative 49 fait correspondre à cette première position du poussoir 43' une première position de la deuxième came rotative 49 libérant le culbuteur associé 31 et le levier de transmission 30 placé en une première position inactive, permettant l'ouverture et la fermeture normale du deuxième disjoncteur 11. Lors d'une fermeture ou en position fermée du premier disjoncteur 11', représenté à la figure 6, la manivelle 13' déplace le poussoir 43' vers la deuxième position abaissée en provoquant la rotation dans le sens des aiguilles d'une montre du tube 45 pour amener la deuxième came rotative 49 en une deuxième position active d'engagement du culbuteur 31 et de coulissement vers le haut du levier de transmission 30 vers une position de déclenchement actionnant l'accrochage 22 pour libérer le verrou 21. Dans cette position, le deuxième disjoncteur 11 est automatiquement déclenchée et toute manoeuvre de fermeture est impossible, le verrou 21 n'étant pas bloqué. Cette première liaison mécanique comprenant le tube 45 assure un interverrouillage entre les deux disjoncteurs 11' et 11, de façon que lorsque le premier disjoncteur 11' est en position ouvert, le deuxième disjoncteur peut être ouvert ou fermé, mais par contre en cas de fermeture du premier disjoncteur 11', le deuxième disjoncteur 11 est obligatoirement ouvert. La deuxième liaison mécanique qui comporte l'axe 46 assure d'une manière identique une liaison entre le disjoncteur 11 et 11', de manière qu'en position d'ouverture du deuxième disjoncteur 11, le premier disjoncteur 11' peut être ouvert ou fermé, mais par contre, en position de fermeture du deuxième disjoncteur 11, le premier disjoncteur 11' est obligatoirement ouvert.

Ce dispositif d'interverrouillage est particulièrement simple, et il peut être adjoint à des disjoncteurs standards, sans contrainte particulière. Le culbuteur 31 et le levier de transmission 30 sont utilisables pour d'autres fonctions, notamment pour la fonction de prédéclenchement décrite en référence des figures 1 à 4.

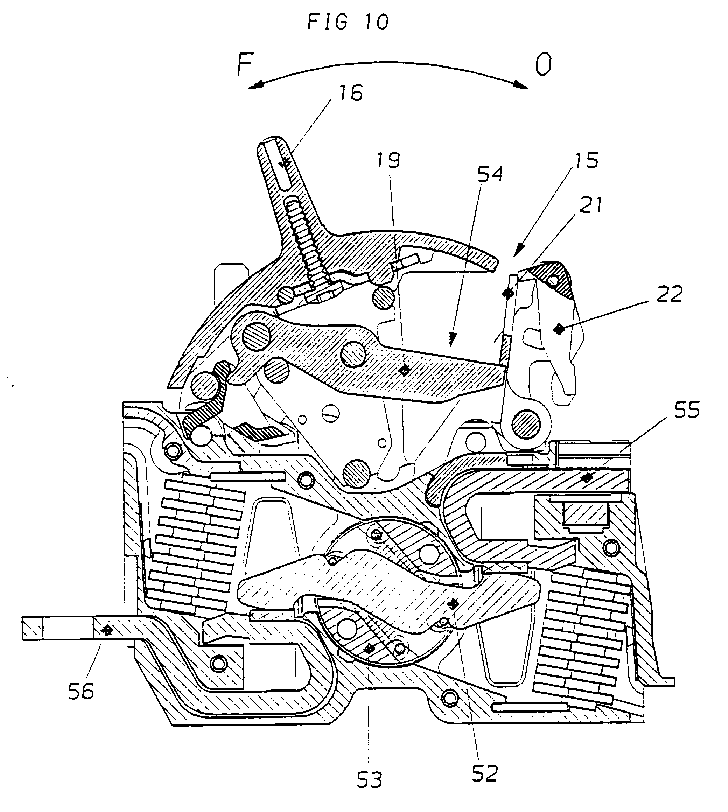

Le dispositif d'interverrouillage est avantageusement utilisé pour des disjoncteurs du type représenté à la figure 10, faisant entre autres, l'objet de la demande de brevet français précitée, dans lesquels les contacts de coupure 52 sont agencés en pont de contacts, monté flottant sur un barreau ou un tronçon de barreau 53, solidaire des manivelles 13 du mécanisme 15. Le crochet 19 présente sur sa tranche un profil de réarmement 54 agencé de manière à faire coïncider la position de réarmement de la poignée 16 avec sa position d'ouverture. Un disjoncteur ouvert est ainsi toujours prêt à être fermé, même si le disjoncteur associé a transmis des ordres de déclenchement par actionnement du levier de transmission 30.

Il est clair que le système de transmission entre les deux disjoncteurs peut être réalisé par deux barres indépendantes ou par tout autre moyen opérant et que l'invention est nullement limitée au mode de mise en oeuvre plus particulièrement décrit.

## Revendications

1. Disjoncteur basse tension débrochable à boîtier moulé (12) comprenant une partie fixe, notamment un socle (10) ou un châssis de raccordement doté de contacts fixes d'embrochage (26) et une partie mobile (11) susceptible d'être déplacée entre une position embrochée et une position débrochée de la partie fixe et ayant des contacts mobiles d'embrochage (24) qui coopèrent en position embrochée avec les contacts fixes d'embrochage (26), ladite partie mobile comprenant ledit boîtier moulé (12) et logés à l'intérieur du boîtier moulé des contacts de coupure (52), un mécanisme (15) de commande d'ouverture et de fermeture des contacts de coupure (52), un dispositif de déclenchement (21,22) qui provoque l'ouverture des contacts de coupure lors d'un défaut, un levier de transmission (30) susceptible de coopèrer d'une part avec le dispositif de déclenchement (21,22), et d'autre part avec ladite partie fixe, de manière qu'en position embrochée, ledit levier de transmission (30) est en position inactive autorisant l'ouverture et la fermeture des contacts de coupure, et que pendant le déplacement de la partie mobile (11) de la position embrochée vers la position débrochée et avant la séparation des contacts fixes (26) et mobiles (24) d'embrochage, ladite partie fixe coopère avec ledit levier de transmission (30) pour actionner ledit dispositif de déclenchement (21,22) et provoque ou confirme l'ouverture des contacts de coupure (52) caractérisé en ce que ledit levier de transmission est susceptible de coopérer avec une came fixe (29) solidaire de la partie fixe, et qu'en position débrochée ledit levier de transmission (30) est à nouveau en position inactive autorisant l'ouverture et la fermeture des contacts de coupure.

2. Disjoncteur selon la revendication 1, caractérisé en ce que ladite came fixe (29) est agencée de manière à coopérer avec ledit levier de transmission (30) pendant le déplacement de la partie mobile (11) de la position débrochée vers la position embrochée et avant l'embrochage desdits contacts d'embrochage pour actionner ledit dispositif de déclenchement (21,22) et provoquer ou confirmer l'ouverture des contacts de coupure (52).

3. Disjoncteur selon la revendication 1, caractérisé en ce que ledit boîtier moulé (12) de forme parallélépipédique comprend une face avant portant une poignée pivotante (16) de commande manuelle et une face arrière parallèle portant lesdits contacts d'embrochage (24,26), que le mouvement de débrochage est perpendiculaire auxdites faces avant et arrière (25), et que ledit levier de transmission (30) fait saillie de la face arrière (25) et coopère avec une came fixe (29) s'étendant dans la direction de débrochage.

4. Disjoncteur selon la revendication 1, 2 ou 3, caractérisé en ce que ledit levier de transmission (30) est monté à coulissement dans un orifice (37) qui est ménagé dans ladite face arrière (25) et est prolongé par un passage (38) qui s'étend dans la direction de déplacement de la partie mobile (11).

5. Disjoncteur selon la revendication 4, caractérisé en ce qu'un support (32) en forme d'équerre est assujetti à ladite face arrière (25) du côté extérieur du boîtier moulé (12), qu'un culbuteur (31) est monté à pivotement sur ledit support (32) et présente un premier bras (33) sensiblement parallèle à la face arrière (25), et un deuxième bras perpendiculaire (35) s'étendant dans la direction de déplacement de la partie mobile (11), que l'extrémité en saillie du levier de transmission (30) est articulée audit premier bras (33) et que ledit deuxième bras (35) porte un suiveur de came (36) pour transformer un mouvement sensiblement parallèle à la face arrière (25) en un mouvement de coulissement du levier de transmission (30).

6. Disjoncteur selon l'une quelconque des revendications précédentes, caractérisé en ce que les contacts fixes d'embrochage (26) en forme de tulipes sont prolongés en direction du boîtier moulé (12) par des douilles isolantes (28) de guidage dans lesquelles s'emboîtent les contacts mobiles d'embrochage (24) en forme de broches pour guider la partie mobile (11).

7. Disjoncteur selon la revendication 6, caractérisé en ce que lesdites broches (24) s'engagent dans lesdites douilles (28) de guidage avant que ledit levier de transmission (30) coopère avec ladite came fixe (29) et se dégage desdites douilles (28), après que le levier de transmission (30) quitte ladite came.

8. Disjoncteur selon l'une quelconque des revendications précédentes, caractérisé en ce que ledit levier de transmission (30) est utilisable dans un dispositif d'interverrouillage de deux disjoncteurs.

## Patentansprüche

1. Steckbarer Niederspannungs-Leistungsschalter mit Isolierstoffgehäuse (12), der einen feststehenden Teil, insbesondere einen Stecksockel (10) oder ein Chassis mit feststehenden Steckkontakten (26) sowie einen beweglichen Teil (11) umfaßt, der dazu dient, auf den feststehenden Teil aufgesteckt bzw. von diesem abgezogen zu werden, und bewegliche Steckkontakte (24) aufweist, die in der eingesteckten Stellung mit den feststehenden Steckkontakten (26) zusammenwirken, wobei der genannte bewegliche Teil das genannte Isolierstoffgehäuse (12), im Innern des Isolierstoffgehäuses angeordnete Schaltkontakte (52), einen Schaltmechanismus (15) zum Ein- und Ausschalten der Schaltkontakte (52), eine Auslösevorrichtung (21, 22), die bei Auftreten eines Fehlers das Ausschalten der Schaltkontakte bewirkt, sowie einen Übertragungshebel (30) umfaßt, der dazu dient, einerseits mit der Auslösevorrichtung (21, 22) und andererseits mit dem genannten feststehenden Teil zusammenzuwirken, derart daß der genannte Übertragungshebel (30) in der eingesteckten Stellung eine inaktive Stellung einnimmt, die das Ausschalten und Einschalten der Schaltkontakte erlaubt, und daß während der Überführung des beweglichen Teils (11) von der eingesteckten Stellung in die abgezogene Stellung und vor der Trennung der feststehenden Steckkontakte (26) und der beweglichen Steckkontakte (24) der genannte feststehende Teil mit dem genannten Übertragungshebel (30) zusammenwirkt, um die genannte Auslösevorrichtung (21, 22) zu betätigen, und das Ausschalten der Schaltkontakte (52) bewirkt oder bestätigt, dadurch gekennzeichnet, daß der genannte Übertragungshebel dazu dient, mit einer, mit dem feststehenden Teil verbundenen, ortsfesten Steuerkurve (29) zusammenzuwirken und der genannte Übertragungshebel (30) in der abgezogenen Stellung erneut eine inaktive Stellung einnimmt, die das Ausschalten und Einschalten der Schaltkontakte erlaubt.

2. Leistungsschalter nach Anspruch 1, dadurch gekennzeichnet, daß die genannte ortsfeste Steuerkurve (29) dazu ausgelegt ist, während der Überführung des beweglichen Teils (11) von der abgezogenen Stellung in die eingesteckte Stellung und vor dem Ineinandergreifen der genannten Steckkontakte mit dem genannten Übertragungshebel (30) zusammenzuwirken, um die genannte Auslösevorrichtung (21, 22) zu betätigen und das Ausschalten der Schaltkontakte (52) zu bewirken oder zu bestätigen.

3. Leistungsschalter nach Anspruch 1, dadurch gekennzeichnet, daß das kastenförmige Isolierstoffgehäuse (12) eine Vorderseite mit einem Kipphebel (16) zur manuellen Betätigung sowie eine parallel dazu angeordnete, die genannten Steckkontakte (24, 26) tragende Rückseite aufweist, daß die Abziehbewegung senkrecht zur genannten Vorder- und Rückseite (25) erfolgt und daß der genannte Übertragungshebel (30) aus der Rückseite (25) hervorsteht und mit einer, in Abziehrichtung angeordneten ortsfesten Steuerkurve (29) zusammenwirkt.

4. Leistungsschalter nach Anspruch 1, 2 oder 3, dadurch gekennzeichnet, daß der genannte Übertragungshebel (30) gleitend in einer, in der genannten Rückseite (25) ausgebildeten Öffnung (37) gelagert ist, die durch eine, in der Bewegungsebene des beweglichen Teils (11) verlaufende Durchführungsöffnung (38) verlängert ist.

5. Leistungsschalter nach Anspruch 4, dadurch gekennzeichnet, daß ein winkelförmiges Trägerelement (32) an der genannten Rückseite (25), außen am Isolierstoffgehäuse (12) befestigt ist, daß eine Kippvorrichtung (31) schwenkbar auf diesem Trägerelement (32) montiert ist und einen, annähernd parallel zur Rückseite (25) angeordneten ersten Hebelarm (33) sowie einen senkrecht dazu angeordneten, in der Bewegungsebene des beweglichen Teils liegenden, zweiten Hebelarm (35) aufweist, daß das hervorstehende Ende des Übertragungshebels (30) an den ersten Hebelarm (33) angelenkt ist und daß am genannten zweiten Hebelarm (35) ein von der Steuerkurve geführtes Nachlaufelement (36) angebracht ist, um eine annähernd parallel zur Rückseite (25) verlaufende Bewegung in eine Gleitbewegung des Übertragungshebels (30) umzuwandeln.

6. Leistungsschalter nach einem der vorhergehenden Ansprüche, dadurch gekennzeichnet, daß die als Kontakttulpen ausgebildeten, feststehenden Steckkontakte (26) in Richtung des Isolierstoffgehäuses (12) durch Isolierstoff-Führungshülsen (28) verlängert sind, in die die als Kontaktstifte ausgebildeten, beweglichen Steckkontakte (24) zur Führung des beweglichen Teils (11) eingreifen.

7. Leistungsschalter nach Anspruch 6, dadurch gekennzeichnet, daß die genannten Kontaktstifte (24) in die genannten Führungshülsen (28) eingreifen, bevor der genannte Übertragungshebel (30) mit der genannten ortsfesten Steuerkurve (29) zusammenwirkt, und sich von den genannten Hülsen (28) lösen, nachdem sich der Übertragungshebel (30) von der genannten Steuerkurve zurückzieht.

8. Leistungsschalter nach irgendeinem der vorhergehenden Ansprüche, dadurch gekennzeichnet, daß der Übertragungshebel (30) in einer Vorrichtung zur gegenseitigen Verriegelung von zwei Leistungsschaltern eingesetzt werden kann.

## Claims

1. A rack-out low-voltage circuit breaker with moulded case (12) comprising a fixed part, notably a connecting base (10) or frame provided with stationary racking contacts (26) and a movable part (11) able to be moved between a racked-in position and a racked-out position of the fixed part and having movable racking contacts (24) which cooperate in the racked-in position with the stationary racking contacts (26), said movable part comprising said moulded case (12) and housed inside the moulded case breaking contacts (52), an operating mechanism (15) for opening and closing of the breaking contacts (52), a trip device (21, 22) which brings about opening of the breaking contacts when a fault occurs, a transmission lever (30) designed to cooperate on the one hand with the trip device (21, 22) and on the other hand with said fixed part, so that in the racked-in position, said transmission lever (30) is in the inactive position enabling opening and dosing of the breaking contacts, and that during the movement of the movable part (11) from the racked-in position to the racked-out position and before separation of the stationary (26) and movable (24) racking contacts, said fixed part cooperates with said transmission lever (30) to actuate said trip device (21, 22) and brings about or confirms opening of the breaking contacts (52), characterized in that said transmission lever (30) is designed to cooperate with a fixed cam (29) securedly united to the fixed part, and that in the racked-out position said transmission lever (30) is again in the inactive position enabling opening and closing of the breaking contacts.

2. The circuit breaker according to claim 1, characterized in that said fixed cam (29) is arranged in such a way as to cooperate with said transmission lever (30) during the movement of the movable part (11) from the racked-out position to the racked-in position and before racking-in of said racking contacts to actuate said trip device (21, 22) and bring about or confirm opening of the breaking contacts (52).

3. The circuit breaker according to claim 1, characterized in that said moulded case (12) of parallelepipedic shape comprises a front panel bearing a pivoting manual operating handle (16) and a parallel rear panel bearing said racking contacts (24, 26), that the racking-out movement is perpendicular to said front and rear (25) panels, and that said transmission lever (30) protrudes out from the rear panel (25) and cooperates with a fixed cam (29) extending in the racking-out direction.

4. The circuit breaker according to claim 1, 2 or 3, characterized in that said transmission lever (30) is mounted with sliding in an orifice (37) which is arranged in said rear panel (25) and is extended by a passage (38) which extends in the direction of movement of the movable part (11).

5. The circuit breaker according to claim 4, characterized in that a support (32) in the form of a bracket is fixed to said rear panel (25) on the external side of the moulded case (12), that a rocker (31) is pivotally mounted on a said support (32) and presents a first arm (33) appreciably parallel to the rear panel (25), and a second perpendicular arm (35) extending in the direction of movement of the movable part (11), that the protruding end of the transmission lever (30) is articulated on said first arm (33) and that said second arm (35) bears a cam follower (36) to transform a movement appreciably parallel to the rear panel (25) into a sliding movement of the transmission lever (30).

6. The circuit breaker according to any one of the above claims, characterized in that the stationary racking contacts (26) in the form of tulip-fingers are extended in the direction of the moulded case (12) by insulating guide sleeves (28) in which the movable racking contacts (24) in the form of studs engage to guide the movable part (11).

7. The circuit breaker according to claim 6, characterized in that said studs (24) engage in said guide sleeves (28) before said transmission lever (30) cooperates with said fixed cam (29) and disengages from said sleeves (28), after the transmission lever (30) leaves said cam.

8. The circuit breaker according to any one of the above claims, characterized in that said transmission lever (30) can be used in a device for interlocking two circuit breakers.
